(19) Europäisches Patentamt / European Patent Office / Office européen des brevets

(11) **EP 3 930 119 A1**

(12) **EUROPEAN PATENT APPLICATION**
published in accordance with Art. 153(4) EPC

(43) Date of publication:
**29.12.2021 Bulletin 2021/52**

(51) Int Cl.:
*H01S 3/067* (2006.01)     *G02B 6/02* (2006.01)
*G02B 6/036* (2006.01)     *G02B 6/44* (2006.01)

(21) Application number: **20759113.2**

(22) Date of filing: **20.02.2020**

(86) International application number:
**PCT/JP2020/006676**

(87) International publication number:
**WO 2020/171152 (27.08.2020 Gazette 2020/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.02.2019 JP 2019028636**

(71) Applicant: **Fujikura Ltd.**
**Tokyo 135-8512 (JP)**

(72) Inventors:
• **FUNATSU Tomoki**
**Sakura-shi, Chiba 285-8550 (JP)**
• **OHMORI Kenichi**
**Sakura-shi, Chiba 285-8550 (JP)**
• **SHIMA Kensuke**
**Sakura-shi, Chiba 285-8550 (JP)**

(74) Representative: **Plasseraud IP**
**66, rue de la Chaussée d'Antin**
**75440 Paris Cedex 09 (FR)**

(54) **OPTICAL DEVICE AND LASER APPARATUS**

(57) An optical device includes a core, a first cladding that covers the core and has a lower refractive index than the core, a second cladding that covers the first cladding and has a lower refractive index than the first cladding, a slanted FBG that is formed in the core and couples SRS light propagating through the core to the first cladding, and a high refractive index material that has a higher refractive index than the second cladding and which covers an outer peripheral surface of a removal portion where the second cladding is removed and a portion of the first cladding which covers the region where the slanted FBG is formed in the core.

FIG. 2

**Description**

TECHNICAL FIELD

The present invention relates to an optical device and laser apparatus.

The present application claims priority based on Japanese Patent Application No. 2019-028636 filed in Japan on February 20, 2019, the contents of which are incorporated herein by reference.

BACKGROUND ART

Currently, laser apparatuses are used in various fields such as processing fields, automobile fields, and medical fields. In recent years, in the processing field, a fiber laser apparatus having excellent beam quality and light-collecting property as compared with a conventional laser apparatus (for example, a carbon dioxide gas laser apparatus) has attracted attention. The maximum output of such a fiber laser apparatus is limited by induced Raman scattering (SRS) that occurs non-linearly with respect to the laser output.

The following Patent Document 1 discloses a technique for reducing SRS light by forming a slanted Fiber Bragg Grating (FBG) in the core of a fiber laser apparatus. According to such a technique, SRS light can be selectively removed from the light propagating in the core. As a result, it is possible to stabilize the signal light propagating in the core and prevent damage to the excitation light source.

PRIOR ART

PATENT DOCUMENT

[Patent Document 1] United States Patent No. 9634462

DISCLOSURE OF INVENTION

PROBLEMS TO BE SOLVED BY THE INVENTION

In a high-power fiber laser apparatus, when a slanted FBG is formed on the core, high-power SRS light removed from the core is guided in the cladding. When high-power SRS light is intensively applied to, for example, the protective coating covering the cladding, it is possible that the protective coating generates heat and burns out. Alternatively, when SRS light guided in the cladding reaches the excitation light source, the excitation light source may be damaged.

In addition, in a high-power fiber laser apparatus, when a slanted FBG is formed on the core, it is conceivable that a portion of the signal light propagating in the core leaks to the cladding and is guided in the cladding. When such signal light is applied to, for example, the protective coating covering the cladding, it is possible that the protective coating generates heat and burns out, as in the case where high-power SRS light is intensively irradiated.

The present invention has been made in view of the above circumstances, and an optical device and a laser apparatus are provided that are capable of preventing the protective coating from burning out due to heat generation by effectively removing the light guided in the cladding when a slanted FBG is formed on the core.

MEANS FOR SOLVING THE PROBLEMS

In order to solve the above-described problems, an optical device (14) according to one aspect of the present invention includes a core (20a), a first cladding (20b) that covers the core and has a lower refractive index than the core, a second cladding (20c) that covers the first cladding and has a lower refractive index than the first cladding, a slanted FBG (14a) that is formed in the core and couples SRS light propagating through the core to the first cladding, and a high refractive index material (21) that has a higher refractive index than the second cladding and which covers an outer peripheral surface of a removal portion (PT2) where the second cladding is removed and a portion (PT1) of the first cladding which covers the region where the slanted FBG is formed in the core.

In the optical device according to one aspect of the present invention, the high refractive index material may have a higher refractive index than the first cladding.

The optical device according to one aspect of the present invention may include a heat dissipation member (22) that covers the high refractive index material.

In the optical device according to one aspect of the present invention, the heat dissipation member may dissipate heat generated by absorption of SRS light and signal light through the high refractive index material.

The optical device according to one aspect of the present invention may further include a reinforcement member (23) provided between the heat dissipation member and the second cladding outside of both ends of the removal portion in a longitudinal direction of the first cladding, where the heat dissipation member is formed longer than the length of the removal portion in the longitudinal direction of the first cladding.

The optical device according to one aspect of the present invention may include at least one cladding mode removal portion (14b) that removes cladding mode light, which includes SRS light coupled from the core to the first cladding by the slanted FBG, from the inside of the first cladding.

A laser apparatus (1, 2) according to one aspect of the present invention may include an excitation light source (11a, 11b) that emits excitation light, a resonator (13) that generates signal light that is laser light by the excitation light emitted from the excitation light source, and an optical device (14) according to any one of the above that is arranged between the resonator and the output end (15) of the signal light.

In the laser apparatus according to one aspect of the present invention, the optical device may be arranged in a region where the residual excitation light of the excitation light emitted from the excitation light source substantially does not reach.

In the laser apparatus according to one aspect of the present invention, the laser apparatus may be a bidirectional excitation fiber laser apparatus including a forward excitation light source (11a) and a backward excitation light source (11b) as the excitation light source, and may include a first combiner (12a) provided between the resonator and the forward excitation light source and a second combiner (12b) provided between the resonator and the backward excitation light source, and the region is a portion located on the output end side of the second combiner.

In the laser apparatus according to one aspect of the present invention, the laser apparatus may be a forward excitation fiber laser apparatus, the resonator (13) may include an amplification fiber (13a) in which an active element activated by excitation light is added to the core, a first FBG (13b) provided between the first end of the amplification fiber and the excitation light source, and a second FBG (13c) provided between the second end of the amplification fiber and the output end, and the region is closer to the output end side than the second FBG.

EFFECTS OF THE INVENTION

According to the present invention, when a slanted FBG is formed on the core, it is possible to effectively remove light guided in the cladding and prevent the protective coating from burning out due to heat generation.

BRIEF DESCRIPTION OF THE DRAWINGS

Fig. 1 is a diagram showing a main structure of a laser apparatus according to a first embodiment of the present invention.
Fig. 2 is a cross-sectional view showing a portion of a configuration of an optical device according to a first embodiment of the present invention.
Fig. 3 is a diagram showing a relationship between a wavelength difference and a refractive index n of a high refractive index material in a first embodiment of the present invention.
Fig. 4 is a diagram schematically showing a traveling path of signal light reflected by a slant FBG in a first embodiment of the present invention.
Fig. 5 is a cross-sectional view showing a modification of an optical device according to a first embodiment of the present invention.

Fig. 6 is a diagram showing a modification of a laser apparatus according to a first embodiment of the present invention.
Fig. 7 is a diagram showing a main structure of a laser apparatus according to a second embodiment of the present invention.
Fig. 8 is a diagram showing a modification of a laser apparatus according to a second embodiment of the present invention.

BEST MODE FOR CARRYING OUT THE INVENTION

Hereinafter, the optical device and the laser apparatus according to the embodiment of the present invention will be described in detail with reference to the drawings. In addition, in the drawings used in the following description, for the sake of clarity, characteristic portions may be enlarged and shown, and the dimensional ratios and the like of each component may not be the same as the actual ones. In addition, the present invention is not limited to the following embodiments.

First Embodiment

(Laser apparatus)

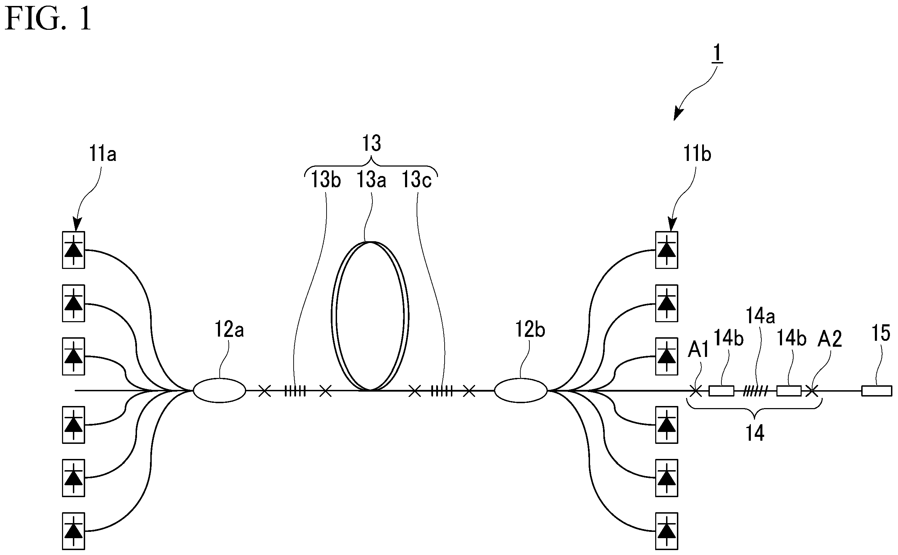

Fig. 1 is a diagram showing a main configuration of a laser apparatus according to the first embodiment of the present invention. As shown in Fig. 1, the laser apparatus 1 of the present embodiment includes an excitation light source (forward excitation light source) 11a, an excitation light source (backward excitation light source) 11b, a first combiner 12a, a second combiner 12b, a resonator 13, an optical device 14, and an output end 15. Such a laser apparatus 1 is a bidirectional excitation fiber laser apparatus including an excitation light source 11a and an excitation light source 11b.

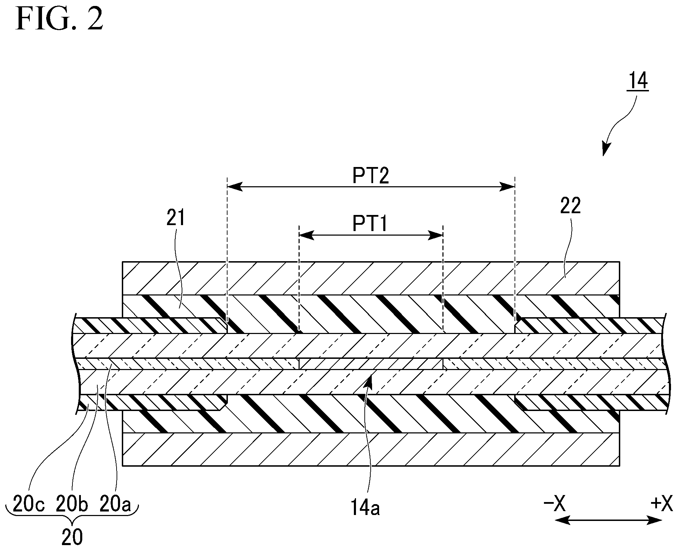

In the following, the longitudinal direction of the optical fiber 20 (see Fig. 2) included in the optical device 14 of the laser apparatus 1 is simply referred to as the "longitudinal direction". In addition, when viewed from the optical fiber 20, the output end 15 side in the longitudinal direction is referred to as "+X side", and the resonator 13 side is referred to as "-X side". Furthermore, the excitation light source 11a side may be referred to as "forward" and the excitation light source 11b side may be referred to as "backward" when viewed from the amplification fiber 13a of the resonator 13.

As shown in Fig. 1, a plurality of excitation light sources 11a and excitation light sources 11b are arranged with the resonator 13 interposed therebetween. The excitation light source 11a emits excitation light (forward excitation light) toward the resonator 13, and the excitation light source 11b emits excitation light (backward excitation light) toward the resonator 13. As the excitation light source 11a and the excitation light source 11b, for example, a laser diode can be used.

The first combiner 12a and the second combiner 12b are arranged on both sides of the resonator 13. The first combiner 12a couples the excitation light emitted by each of the excitation light sources 11a to one optical fiber and directs the excitation light to the resonator 13. The second combiner 12b couples the excitation light emitted by each of the excitation light sources 11b to one optical fiber and directs the excitation light to the resonator 13.

The resonator 13 includes an amplification fiber 13a, a High Reflectivity-Fiber Bragg Grating (HR-FBG) 13b, and an Output Coupler-Fiber Bragg Grating (OC-FBG) 13c. The resonator 13 generates signal light, which is a laser beam, by the excitation light emitted from the excitation light source 11a and the excitation light source 11b.

The amplification fiber 13a has a core to which one or more kinds of active elements are added, a first cladding covering the core, a second cladding covering the first cladding, and a protective coating covering the second cladding. That is, the amplification fiber 13a is a double cladding fiber. As the active element added to the core, for example, a rare earth element such as erbium (Er), ytterbium (Yb), or neodymium (Nd) is used. These active elements emit light in the excitation state. Silica glass or the like can be used as the core and the first cladding. As the second cladding, a resin such as a polymer can be used. As the protective coating, a resin material such as an acrylic resin or a silicone resin can be used.

The HR-FBG (first FBG) 13b is formed in the core of the optical fiber which is fusion-spliced to a front end portion of the amplification fiber 13a. The HR-FBG 13b is adjusted so as to reflect light having a wavelength of signal light with a reflectance of approximately 100% among the light emitted by the active element of the excitation amplification fiber 13a. The HR-FBG 13b has a structure in which a portion having a high refractive index is repeated at regular intervals along the longitudinal direction thereof.

The OC-FBG (second FBG) 13c is formed in the core of the optical fiber fused to a rear end portion of the amplification fiber 13a. The OC-FBG 13c has almost the same structure as the HR-FBG 13b; however, is adjusted to reflect light with a lower reflectance than the HR-FBG 13b. For example, the OC-FBG 13c is adjusted so that the reflectance with respect to the light having a wavelength of the signal light is approximately 10 to 20%.

In the amplification fiber 13a, the signal light reflected by the HR-FBG 13b and the OC-FBG 13c reciprocates in the longitudinal direction of the amplification fiber 13a. The signal light is amplified along with the reciprocation to become laser light. In such a manner, in the resonator 13, the light is amplified and the laser beam is generated. A portion of the laser beam passes through the OC-FBG 13c, reaches the output end 15 via the optical device 14, and is output to the outside.

(Optical device)

The optical device 14 includes a slanted FBG 14a and a cladding mode removal portion 14b. The cladding mode removal portion 14b is provided on the +X side and the -X side of the slanted FBG 14a so as to sandwich the slanted FBG 14a in the longitudinal direction. Such an optical device 14 is provided to remove cladding mode light including SRS light propagating in the core 20a (see Fig. 2) of the optical fiber 20 and SRS light propagating in the first cladding 20b of the optical fiber 20.

The optical device 14 is arranged between the resonator 13 and the output end 15. In particular, the optical device 14 is arranged in a region where the residual excitation light of the excitation light emitted from the excitation light source 11a and the excitation light source 11b does not substantially reach. The "where the residual excitation light does not substantially reach" in the present embodiment is, for example, a portion of the laser apparatus 1 located on the +X side of the second combiner 12b. In the region, since the excitation light is sufficiently absorbed by the core of the amplification fiber 13a forming the resonator 13, it is possible to avoid a situation in which the excitation light is unexpectedly removed by the optical device 14.

Another optical fiber (an optical fiber at a resonator side) is fusion-spliced to an end portion of the -X side of the optical fiber 20 included in the optical device 14, and another optical fiber (an optical fiber at an output side) is fusion-spliced to an end portion of the +X side. Hereinafter, a fusion-spliced portion between the optical fiber 20 and the optical fiber on the resonator side is referred to as a first spliced portion A1, and a fusion-spliced portion between the optical fiber 20 and the optical fiber on the output side is referred to as a second spliced portion A2.

Fig. 2 is a cross-sectional view showing a portion of the configuration of the optical device according to the first embodiment of the present invention. The cross-sectional view shown in Fig. 2 shows only the portion where the slanted FBG 14a is formed and the vicinity thereof. In Fig. 2, the portion where the cladding mode removal portion 14b is formed and the vicinity thereof are not shown.

As shown in Fig. 2, the optical device 14 includes an optical fiber 20, a high refractive index material 21, and a heat dissipation member 22. The optical fiber 20 has a core 20a on which a slanted FBG 14a is formed, a first cladding 20b, and a second cladding 20c. That is, the optical fiber 20 is a double cladding fiber having a core 20a on which a slanted FBG 14a is formed.

The optical fiber 20 has a protective coating that covers the second cladding 20c; however, the protective coating is not shown in Fig. 2.

As the core 20a and the first cladding 20b of the optical fiber 20, for example, silica glass or the like can be used. As the second cladding 20c of the optical fiber 20, a resin such as a polymer can be used. That is, a double cladding fiber having a glass cladding formed of silica glass and a polymer cladding formed of a polymer material can be used as the optical fiber 20.

The first cladding 20b covers the core 20a and has a lower refractive index than the core 20a. The second cladding 20c covers the first cladding 20b and has a lower refractive index than the first cladding 20b. As the protective coating (not shown), a resin material such as an acrylic resin or a silicone resin can be used. These resin materials used as protective coatings generally absorb light and generate heat.

The slanted FBG 14a is formed in the core 20a of the optical fiber 20 and is for binding (mode coupling) the SRS light propagating in the core 20a to the first cladding 20b. The slanted FBG 14a is formed by partially irradiating the core 20a of the optical fiber 20 with a processing light ray (ultraviolet laser beam or the like) to modulate the refractive index of the core 20a in the longitudinal direction. In the present embodiment, in order to form the slanted FBG 14a, the second cladding 20c and the protective coating (not shown) are partially removed, and the core 20a is irradiated with a light beam for processing through the removal portion.

The slanted FBG 14a is configured so as to transmit light in the wavelength band (for example, 1070 nm) of the signal light used as the laser light and release the light in the wavelength band (for example, 1125 nm) of the SRS light from the core 20a toward the first cladding 20b. Although the slanted FBG 14a transmits most of the signal light propagating through the core 20a, it reflects a portion of the signal light. The signal light reflected by the slanted FBG 14a is coupled to the first cladding 20b.

In the slanted FBG 14a, it is desirable that the distance between the refractive index modulation portions in the longitudinal direction be non-uniform. As a result, the wavelength band of the light removed from the core 20a by the slanted FBG 14a increases. In such a manner, the SRS light can be more reliably released toward the first cladding 20b. Therefore, by selectively removing a portion of the SRS light from the core 20a and coupling to the first cladding 20b, it is possible to stabilize the quality of the signal light and prevent damage to the excitation light source 11a and the excitation light source 11b.

The portion from which the second cladding 20c and the like have been removed (removal portion PT2) is covered with the high refractive index material 21 after the slanted FBG 14a is formed. That is, in the first cladding 20b, the outer peripheral surface of the removal portion PT2 including the portion PT1 covering the region where the slanted FBG 14a is formed in the core 20a and from which the second cladding 20c is removed is covered with the high refractive index material 21. In the example shown in Fig. 2, the outer peripheral surface of the second cladding 20c arranged inside the heat dissipation member 22 is also covered with the high refractive index material 21.

Such a high refractive index material 21 is provided to prevent the signal light coupled to the first cladding 20b by the slanted FBG 14a formed on the core 20a from entering the second cladding 20c. As described above, the second cladding 20c is covered with a protective coating, and when the signal light coupled to the first cladding 20b is incident on the second cladding 20c, the protective coating may generate heat and burn out. The high refractive index material 21 is provided in order to prevent such burning out of the protective coating.

As the high refractive index material 21, a resin material having a higher refractive index than the second cladding 20c and having high transparency to signal light and SRS light can be used. The refractive index of the resin material constituting the high refractive index material 21 may be equal to or higher than the refractive index of the first cladding 20b. The principle by which the signal light coupled to the first cladding 20b can be prevented from being incident on the second cladding 20c by providing such a high refractive index material 21 will be described later.

The heat dissipation member 22 is formed longer than the length of the removal portion PT2 in the longitudinal direction, and is provided so as to cover the high refractive index material 21. The heat dissipation member 22 is provided to absorb the SRS light and the signal light through the high refractive index material 21 and dissipate the heat generated by the absorption. The heat dissipation member 22 is, for example, a member having a square cylinder shape or a cylindrical shape, and is formed of, for example, a metal such as aluminum whose inner surface is black anodized. The inner surface of the heat dissipation member 22 is treated with black alumite in order to prevent reflection of the SRS light and the signal light incident on the inner surface.

The cladding mode removal portion 14b shown in Fig. 1 is a so-called cladding mode stripper. Here, the cladding mode stripper is formed by, for example, intermittently removing a portion of the second cladding 20c of the optical fiber 20 and the protective coating (not shown) along the longitudinal direction, and covering the removal portion with a high refractive index resin or the like. Such a cladding mode stripper can remove cladding mode light including SRS light from the inside of the first cladding 20b to a high refractive index resin or the like.

(Principle of providing a high refractive index material)

The basic reflection wavelength of the slanted FBG 14a is $\lambda 0$, and the wavelength difference between the wavelength of the signal light propagating in the core 20a and $\lambda 0$ is $\Delta \lambda$. In addition, the refractive index of the core 20a is nc, and the refractive index of the high refractive index material 21 is n. The wavelength band of the signal light propagating in the core 20a is, for example, a central wavelength of 1070 nm and a wavelength width of about several tens of nm. Therefore, it should be noted that the above-mentioned wavelength difference Δλ also has a width similar to the above-mentioned wavelength width.

The signal light propagating in the core 20a is coupled to the first cladding 20b when the following equation (1) is satisfied.

$$\Delta\lambda < \{(nc-n)/(2\cdot nc)\} \times \lambda 0 \qquad (1)$$

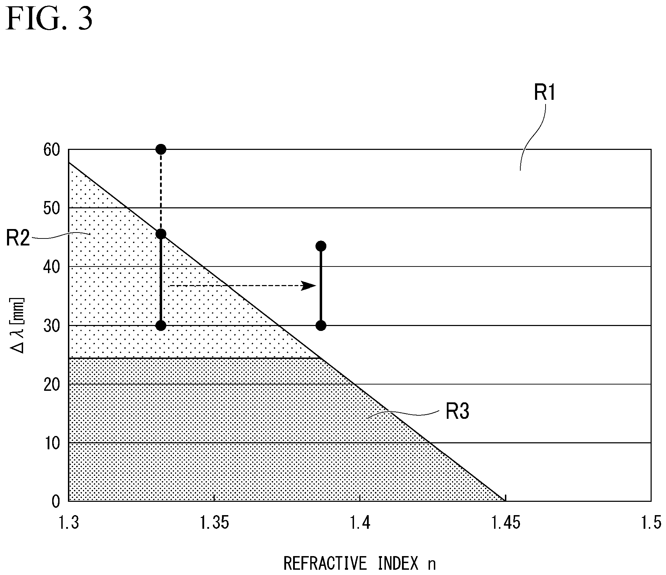

Fig. 3 is a diagram showing the relationship between the wavelength difference Δλ and the refractive index n of the high refractive index material in the first embodiment of the present invention. In the graph shown in Fig. 3, the wavelength difference Δλ is on the vertical axis, and the refractive index n of the high refractive index material 21 is on the horizontal axis. In Fig. 3, the basic reflection wavelength λ0 of the slanted FBG 14a is set to 1120 nm. In addition, since the refractive index difference between the core 20a and the first cladding 20b is sufficiently smaller than the refractive index difference between the first cladding 20b and the second cladding 20c, the refractive index nc of the core 20a and the refractive index of the first cladding 20b is 1.45 (refractive index of quartz), and the refractive index of the second cladding 20c is 1.38 (refractive index of polymer material). The graph shown in Fig. 3 is roughly divided into regions R1 and regions R2 and R3 according to the relationship between the wavelength difference Δλ and the refractive index n of the high refractive index material 21.

The region R1 is a region where the above equation (1) is not satisfied, and the regions R2 and R3 are regions where the above equation (1) is satisfied. That is, the region R1 is a region where the signal light propagating in the core 20a is not coupled to the first cladding 20b, and the regions R2 and R3 are regions where the signal light propagating in the core 20a is coupled to the first cladding 20b. Here, the region R2 is a region where the signal light coupled to the first cladding 20b is incident on the second cladding 20c, whereas the region R3 is a region where the signal light coupled to the first cladding 20b propagates through the first cladding 20b without being incident on the second cladding 20c.

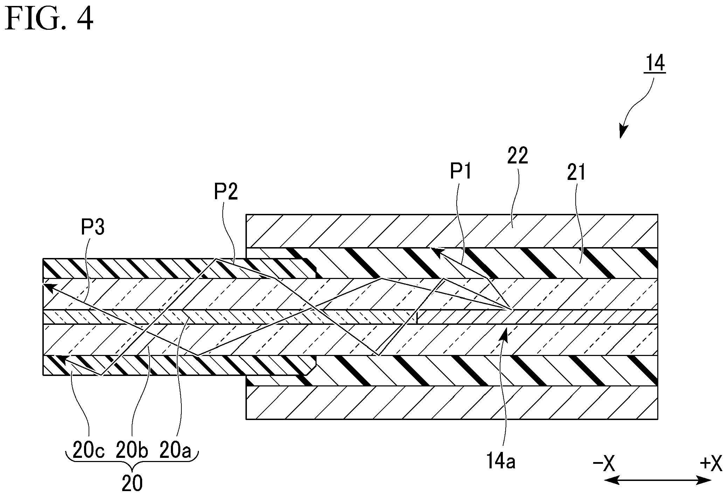

Fig. 4 is a diagram schematically showing a traveling path of signal light reflected by a slanted FBG in the first embodiment of the present invention. When the relationship between the wavelength difference Δλ and the refractive index n of the high refractive index material 21 is included in the region R1, the signal light reflected by the slanted FBG 14a is, for example, the traveling path P1 shown in Fig. 4, and the light is incident on the heat dissipation member 22 via the first cladding 20b and the high refractive index material 21.

When the relationship between the wavelength difference Δλ and the refractive index n of the high refractive index material 21 is included in the region R2, the signal light reflected by the slanted FBG 14a is incident on the second cladding 20c when the signal light propagates in the first cladding 20b and reaches the second cladding 20c as the traveling path P2 shown in Fig. 4, for example. When the relationship between the wavelength difference Δλ and the refractive index n of the high refractive index material 21 is included in the region R3, the signal light reflected by the slanted FBG 14a is, for example, the traveling path P3 shown in Fig. 4, and is propagated through the first cladding 20b without being incident on the second cladding 20c.

When the signal light reflected by the slanted FBG 14a passes through the traveling path P1 shown in Fig. 4, the signal light is incident on the heat dissipation member 22 and absorbed. In addition, when the signal light reflected by the slanted FBG 14a passes through the traveling path P3 shown in Fig. 4, the signal light is removed by the cladding mode removal portion 14b shown in Fig. 1. On the other hand, when the signal light reflected by the slanted FBG 14a passes through the traveling path P2 shown in Fig. 4, the protective coating covering the second cladding 20c may generate heat and burn out. In order to prevent burning out due to such heat generation, the relationship between the wavelength difference Δλ and the refractive index n of the high refractive index material 21 may not be included in the region R2 shown in Fig. 3.

Assuming that the refractive index n of the high refractive index material 21 is 1.33, which is lower than that of the second cladding 20c, there is a case that the relationship between the wavelength difference Δλ and the refractive index n of the high refractive index material 21 is included in the region R2 as shown in Fig. 3.

On the other hand, when the refractive index n of the high refractive index material 21 is higher than that of the second cladding 20c, the relationship between the wavelength difference Δλ and the refractive index n of the high refractive index material 21 is not included in the region R2 as shown in Fig. 3. In addition, when the refractive index n of the high refractive index material 21 is higher than that of the first cladding 20b, the relationship between the wavelength difference Δλ and the refractive index n of the high refractive index material 21 is not included in the region R3 as shown in Fig. 3. Therefore, the refractive index n of the high refractive index material 21 is higher than the refractive index of the second cladding 20c.

As described above, in the present embodiment, in the first cladding 20b, the outer peripheral surface of the removal portion PT2 including the portion PT1 covering the region where the slanted FBG 14a is formed in the core 20a and from which the second cladding 20c is removed is covered with the high refractive index material 21. Thereby, the signal light reflected by the slanted FBG 14a and bound to the first cladding 20b (in particular, the signal light passing through the traveling path P2 shown in Fig. 4) can be effectively removed. As a result, it is possible to prevent burning out due to heat generation of the protective coating (not shown) covering the second cladding 20c.

In addition, in the present embodiment, the SRS light propagating in the first cladding 20b is also removed by the combination of the slanted FBG 14a provided in the optical device 14 and the cladding mode removal portion 14b. Therefore, it is possible to prevent the protective coating from being irradiated with SRS light and burning out due to heat generation, or the SRS light reaching the excitation light source 11a and the excitation light source 11b and damaging the excitation light source 11a and the excitation light source 11.

(Modification Example)

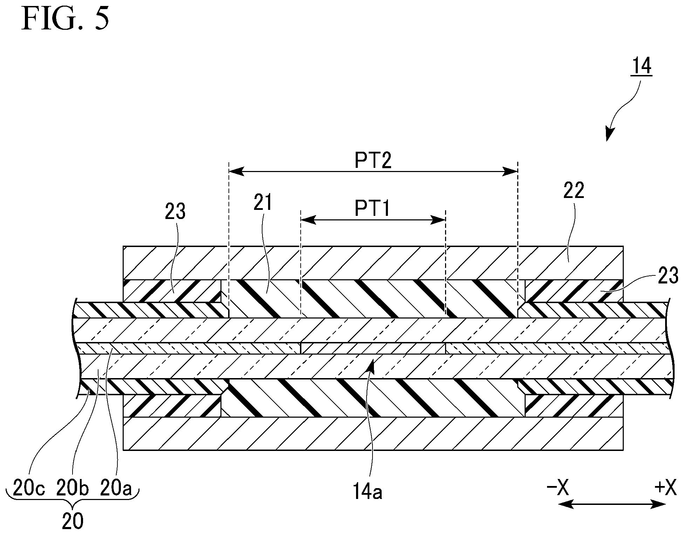

Fig. 5 is a cross-sectional view showing a modification of the optical device according to the first embodiment of the present invention. The optical device 14 shown in Fig. 5 includes a reinforcement member 23 provided between the heat dissipation member 22 and the second cladding 20c on the outer sides of both ends of the removal portion PT2 in the longitudinal direction. The reinforcement member 23 enhances the adhesion strength between the heat dissipation member 22 and the second cladding 20c. As the reinforcement member 23, for example, a resin having a refractive index lower than that of the second cladding 20c can be used.

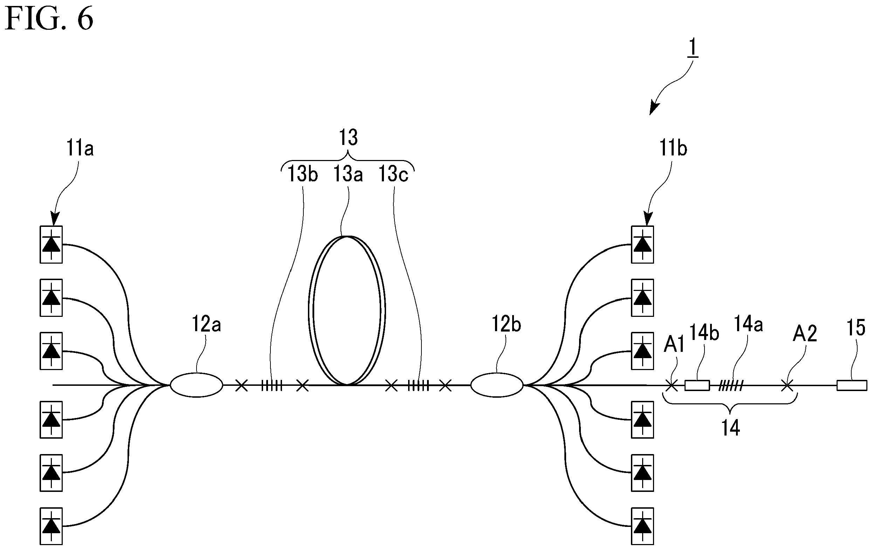

Fig. 6 is a diagram showing a modified example of the laser apparatus according to the first embodiment of the present invention. The laser apparatus 1 shown in Fig. 6 includes an optical device 14 in which the cladding mode removal portion 14b is provided only on the -X side of the slanted FBG 14a. That is, in the optical device 14 provided in the laser apparatus 1, the cladding mode removal portion 14b may be provided only on the -X side of the slanted FBG 14a, or on both sides (+X side and -X side) of the slanted FBG 14a.

Second Embodiment

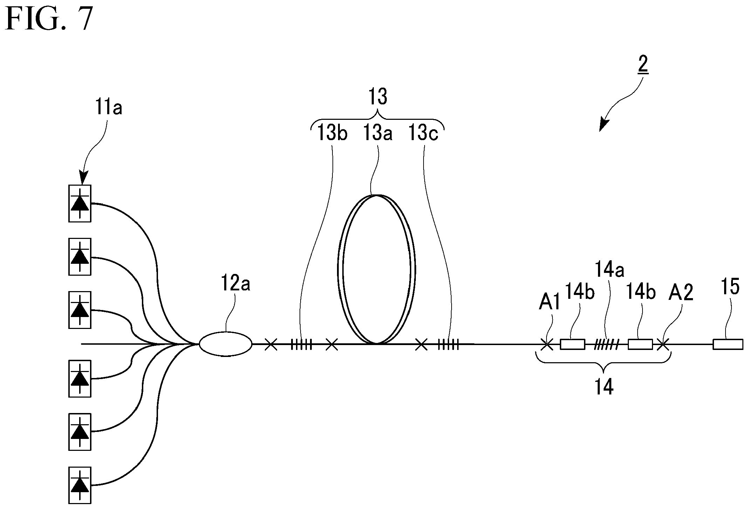

Fig. 7 is a diagram showing a main configuration of a laser apparatus according to the second embodiment of the present invention. In Fig. 7, the same reference numerals are given to the configurations similar to those shown in Fig. 1. In the following, the description of the same configuration as that described with reference to Fig. 1 will be omitted, and only the different portions will be described.

As shown in Fig. 7, the laser apparatus 2 of the present embodiment includes an excitation light source 11a, a first combiner 12a, a resonator 13, an optical device 14, and an output end 15. Such a laser apparatus 2 is a one-sided excitation apparatus that does not have an excitation light source (backward excitation light source) 11b. That is, the laser apparatus 2 is a forward excitation fiber laser apparatus.

The resonator 13 includes an amplification fiber 13a and the HR-FBG (first FBG) 13b and the OC-FBG (second FBG) 13c. The optical device 14 is arranged between the OC-FBG 13c forming the resonator 13 and the output end 15. Also in the present embodiment, in order to prevent the excitation light from being unintentionally removed, the optical device 14 is arranged in a region where the residual excitation light does not substantially reach.

The "region where the residual excitation light does not substantially reach" in the present embodiment is, for example, a portion of the laser apparatus 2 located on the output end 15 side of the OC-FBG 13c. Since the excitation light is sufficiently absorbed by the core of the amplification fiber 13a forming the resonator 13, such a region is suitable as a position for providing the optical device 14. Although detailed description will be omitted, the laser apparatus 2 of the present embodiment can also obtain the same effects as those of the first embodiment.

(Modification Example)

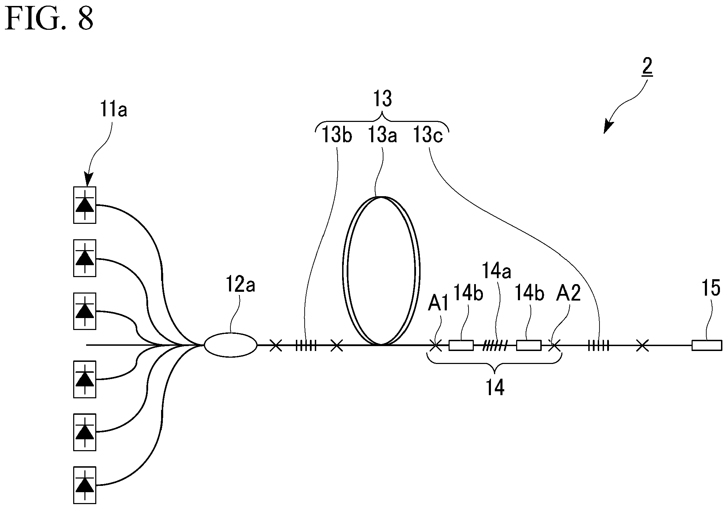

Fig. 8 is a diagram showing a modification of the laser apparatus according to the second embodiment of the present invention. The laser apparatus 2 shown in Fig. 8 has a configuration in which the optical device 14 is arranged between the amplification fiber 13a and the OC-FBG 13c, that is, in the resonator 13. Also in the laser apparatus 2 according to the present modification, the second embodiment is performed by arranging the optical device 14 in a region where the excitation light is sufficiently absorbed by the core of the amplification fiber 13a and the residual excitation light does not substantially reach. The same effect as described above can be obtained.

Although the embodiments of the present invention have been described above, the present invention is not limited to the above embodiments and can be freely modified within the scope of the present invention. For example, the laser apparatuses 1 and 2 of the first and second embodiments described above have one output end 15; however, an optical fiber or the like may be further spliced to the tip of the output end 15. In addition, a beam combiner may be spliced to the tip of the output end 15 so as to bundle the laser beams from a plurality of laser apparatuses.

In addition, the optical devices 14 provided in the laser apparatuses 1 and 2 of the first and second embodiments described above may be used in a Master Oscillator Power Amplifier (MOPA) fiber laser apparatus. Furthermore, the optical device 14 is a laser apparatus such as a semiconductor laser (DDL: Direct Diode Laser) or a disk laser in which the resonator is composed of a non-optical fiber and the laser beam emitted from the resonator is focused on the optical fiber.

DESCRIPTION OF THE REFERENCE SYMBOLS

1, 2: Laser apparatus, 11a, 11b: Excitation light source, 12a: First combiner, 12b: Second combiner, 13: Resonator, 13a: Amplification fiber, 13b: HR-FBG, 13c:

OC-FBG, 14: Optical device, 14a: Slanted FBG, 14b: Cladding mode removal portion, 15: Output end, 20a: Core, 20b: First cladding, 20c: Second cladding, 22: Heat dissipation member, 23: Reinforcement material, PT1: Portion, PT2: Removal portion, 21: High refractive index material

## Claims

1. An optical device, comprising:

   a core,
   a first cladding that covers the core and has a lower refractive index than the core,
   a second cladding that covers the first cladding and has a lower refractive index than the first cladding,
   a slanted FBG that is formed in the core and couples SRS light propagating through the core to the first cladding, and
   a high refractive index material that has a higher refractive index than the second cladding and that covers an outer peripheral surface of a removal portion where the second cladding is removed and a portion of the first cladding that covers the region where the slanted FBG is formed in the core.

2. The optical device according to Claim 1, wherein the high refractive index material has a higher refractive index than the first cladding.

3. The optical device according to Claim 1 or 2, comprising a heat dissipation member that covers the high refractive index material.

4. The optical device according to Claim 3, wherein the heat dissipation member dissipates heat generated by absorption of SRS light and signal light through the high refractive index material.

5. The optical device according to Claim 3 or 4, further comprising a reinforcement member provided between the heat dissipation member and the second cladding outside of both ends of the removal portion in a longitudinal direction of the first cladding, wherein the heat dissipation member is formed longer than the length of the removal portion in the longitudinal direction of the first cladding.

6. The optical device according to Claim 5, comprising at least one cladding mode removal portion that removes cladding mode light, which includes SRS light coupled from the core to the first cladding by the slanted FBG, from the inside of the first cladding.

7. A laser apparatus, comprising:

   an excitation light source that emits excitation light;
   a resonator that generates signal light that is laser light by the excitation light emitted from the excitation light source; and
   an optical device according to any one of Claims 1-6 that is arranged between the resonator and an output end of the signal light.

8. The laser apparatus according to Claim 7, wherein the optical device is arranged in a region where the residual excitation light of the excitation light emitted from the excitation light source substantially does not reach.

9. The laser apparatus according to Claim 8, wherein:

   the laser apparatus is a bidirectional excitation fiber laser apparatus comprising a forward excitation light source and a backward excitation light source as the excitation light source, and comprises a first combiner provided between the resonator and the forward excitation light source and a second combiner provided between the resonator and the backward excitation light source; and
   the region is a portion located on the output end side of the second combiner.

10. The laser apparatus according to Claim 8, wherein:

    the laser apparatus is a forward excitation fiber laser apparatus;
    the resonator comprises an amplification fiber in which an active element activated by excitation light is added to the core, a first FBG provided between the first end of the amplification fiber and the excitation light source, and a second FBG provided between the second end of the amplification fiber and the output end, and the region is closer to the output end side than the second FBG.

FIG. 1

# FIG. 2

FIG. 3

EP 3 930 119 A1

FIG. 4

FIG. 5

FIG. 6

FIG. 7

EP 3 930 119 A1

FIG. 8

EP 3 930 119 A1

## INTERNATIONAL SEARCH REPORT

| International application No. |
|---|
| PCT/JP2020/006676 |

### A. CLASSIFICATION OF SUBJECT MATTER
H01S 3/067(2006.01)i; G02B 6/02(2006.01)i; G02B 6/036(2006.01)i; G02B 6/44(2006.01)i
FI: G02B6/44 316; G02B6/02 B; G02B6/02 416; G02B6/036; H01S3/067
According to International Patent Classification (IPC) or to both national classification and IPC

### B. FIELDS SEARCHED

Minimum documentation searched (classification system followed by classification symbols)
G02B6/02-6/036; G02B6/44; H01S3/00-4/00

Documentation searched other than minimum documentation to the extent that such documents are included in the fields searched
Published examined utility model applications of Japan          1922-1996
Published unexamined utility model applications of Japan        1971-2020
Registered utility model specifications of Japan                1996-2020
Published registered utility model applications of Japan        1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | US 9634462 B2 (KLINER et al.) 25.04.2017 (2017-04-25) column 1, lines 58-61, column 5, line 9 to column 7, line 27, fig. 1, 2 | 1-10 |
| Y | US 2010/0098112 A1 (GAPONTSEV et al.) 22.04.2010 (2010-04-22) paragraphs [0024]-[0035], fig. 3-6 | 1-10 |
| Y | JP 2002-353543 A (MITSUBISHI CABLE INDUSTRIES, LTD.) 06.12.2002 (2002-12-06) paragraph [0035], fig. 4 | 1-10 |
| Y | JP 2002-131550 A (MITSUBISHI CABLE INDUSTRIES, LTD.) 09.05.2002 (2002-05-09) paragraph [0027], fig. 4 | 1-10 |
| Y | JP 2016-529548 A (CORACTIVE HIGH-TECH INC.) 23.09.2016 (2016-09-23) paragraphs [0003], [0037]-[0040], fig. 1, 3 | 1-10 |

☒  Further documents are listed in the continuation of Box C.   ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April 2020 (02.04.2020) | 21 April 2020 (21.04.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2020/006676 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-149469 A (FUJIKURA LTD.) 21.05.2003 (2003-05-21) paragraph [0008], fig. 1 | 1-10 |
| Y | US 2003/0098971 A1 (LAFFONT et al.) 29.05.2003 (2003-05-29) paragraphs [0016]-[0019], fig. 1 | 1-10 |
| Y | WO 2013/145840 A1 (FUJIKURA LTD.) 03.10.2013 (2013-10-03) paragraphs [0038]-[0040], fig. 1-3 | 1-10 |
| Y | CN 104112970 A (SHANGHAI INSTITUTE OF OPTICS AND FINE MECHANICS, CHINESE ACADEMY OF SCIENCES) 22.10.2014 (2014-10-22) paragraphs [0018]-[0021], fig. 1-2 | 1-10 |
| Y | CN 101718916 A (SHANGHAI INSTITUTE OF OPTICS AND FINE MECHANICS, CHINESE ACADEMY OF SCIENCES) 02.06.2010 (2010-06-02) paragraphs [0020]-[0028], fig. 1-3 | 1-10 |
| Y | CN 109149329 A (NANJING UNIVERSITY OF SCIENCE & TECHNOLOGY) 04.01.2019 (2019-01-04) paragraphs [0026]-[0031], fig. 1-4 | 7-10 |
| A | CN 109217098 A (NATIONAL UNIVERSITY OF DEFENSE TECHNOLOGY OF PLA) 15.01.2019 (2019-01-15) paragraphs [0048]-[0061], fig. 1-12 | 1-10 |
| P, X | JP 2019-174502 A (FUJIKURA LTD.) 10.10.2019 (2019-10-10) claims 1-12 | 1-4, 6-10 |

Form PCT/ISA/210 (continuation of second sheet) (January 2015)

**INTERNATIONAL SEARCH REPORT**
Information on patent family members

International application No.

PCT/JP2020/006676

| Patent Documents referred in the Report | Publication Date | Patent Family | Publication Date |
|---|---|---|---|
| US 9634462 B2 | 25 Apr. 2017 | (Family: none) | |
| US 2010/0098112 A1 | 22 Apr. 2010 | (Family: none) | |
| JP 2002-353543 A | 06 Dec. 2002 | (Family: none) | |
| JP 2002-131550 A | 09 May 2002 | (Family: none) | |
| JP 2016-529548 A | 23 Sep. 2016 | (Family: none) | |
| JP 2003-149469 A | 21 May 2003 | US 2003/0063857 A1 paragraphs [0038]-[0039], fig. 1 EP 1291684 A2 CN 1407357 A | |
| US 2003/0098971 A1 | 29 May 2003 | (Family: none) | |
| WO 2013/145840 A1 | 03 Oct. 2013 | US 2015/0029580 A1 paragraphs [0061]-[0064], fig. 1-3 EP 2816382 A1 CN 104169763 A | |
| CN 104112970 A | 22 Oct. 2014 | (Family: none) | |
| CN 101718916 A | 02 Jun. 2010 | (Family: none) | |
| CN 109149329 A | 04 Jan. 2019 | (Family: none) | |
| CN 109217098 A | 15 Jan. 2019 | (Family: none) | |
| JP 2019-174502 A | 10 Oct. 2019 | (Family: none) | |

Form PCT/ISA/210 (patent family annex) (January 2015)

**REFERENCES CITED IN THE DESCRIPTION**

**Patent documents cited in the description**

- JP 2019028636 A

- US 9634462 B